# EUROPÄISCHE PATENTSCHRIFT

(11) **EP 0 608 528 B1**
(45) Veröffentlichungstag und Bekanntmachung des Hinweises auf die Patenterteilung: **04.09.1996**
(21) Anmeldenummer: 93119946.7
(22) Anmeldetag: 10.12.1993
(51) Int. Cl.: B25B 11/00, B23Q 3/10

(54) **Vakuumspannplatte**
Vacuum table
Plaque de serrage à vide

(30) Priorität: 29.01.1993 DE 4302440
(43) Veröffentlichungstag der Anmeldung: 03.08.1994
(73) Patentinhaber: MIELENZ GmbH, D-72290 Lossburg (DE)
(72) Erfinder: Mielenz, Heinz, 72290 Lossburg (DE)
(74) Vertreter: Rüger, Rudolf, Dr.-Ing.

(56) Entgegenhaltungen:
- EP-A- 0 175 295
- DE-A- 3 437 604
- DE-A- 4 000 099
- DE-C- 3 838 988
- US-A- 2 729 040
- US-A- 4 066 249

## Beschreibung

Die Erfindung betrifft eine Vakuumspannplatte, die insbesondere dazu geeignet ist, auch nicht magnetische Werkstücke auf Maschinentischen von spanabhebenden Werkzeugmaschinen festzuhalten, um die Werkstücke zu bearbeiten.

Aus der DE-PS 38 38 988 ist eine Vakuumspannplatte bekannt, die die Gestalt eines Quaders mit quadratischer Grundfläche aufweist. In der Oberseite der Vakuumspannplatte ist ein orthogonales Netz von Nuten angebracht, zwischen denen gleich hohe Erhebungen ausgebildet sind, die die Gestalt von kleinen Tafelbergen haben. Die Oberseite der Erhöhungen ist plan und alle Erhöhungen liegen in einer gemeinsamen Ebene, um die Auflagefläche für das aufzuspannende und zu bearbeitende Werkstück zu bilden.

Im Inneren der Vakuumspannplatte befindet sich eine Kammer, die über mehrere Bohrungen mit den Nuten an der Oberseite der Vakuumspannplatte strömungsmäßig in Verbindung steht. Außerdem sind weitere Öffnungen an der Seite der Vakuumspannplatte vorgesehen, über die,durch schaltbare Ventile gesteuert, eine Vakuumquelle an die Kammer in der Vakuumspannplatte anschließbar ist.

Damit bei mehreren, aufeinanderfolgend zu bearbeitenden gleichen Werkstücken die Werkstücke immer an derselben Stelle der Spannplatte aufgesetzt werden, sind Anschläge vorhanden, die über der Aufspannfläche der Vakuumspannplatte verstellbar zu haltern sind. Die Befestigung dieser Anschläge geschieht mit Hilfe von T-Nutenschrauben und T-Nuten, die am äußeren Rand der Vakuumspannplatte ringsum laufend angeordnet sind. Hierdurch werden Unterbrechungen des Nutenrasters durch die zusätzlich formschlüssig wirkenden Befestigungsmittel verhindert. Solche Unterbrechungen würden die erforderliche Abdichtung des Werkstücks auf der Oberseite der Vakuumspannplatte erheblich beeinträchtigen oder unnötig komplizieren.

Außerdem sind zur seitlichen Unterstützung der zu bearbeitenden Werkstücke auch die Anschläge mit einem Nutenraster versehen.

Die bekannte Vakuumspannplatte wird in einer herstellerseitig festgelegten Größe geliefert. Sie kann nicht, den Anforderungen entsprechend, unterschiedlich dimensioniert werden.

Die EP-A-0 175 295 zeigt eine Vakuumspannvorrichtung zum Aufspannen von Werkstücken auf Werkbänken, Tischen u.dgl. Diese bekannte Vakuumspannvorrichtung besteht aus mehreren Vakuumelementen, von denen jedes eine plattenartige Oberseite mit ebener Oberfläche und eine Seitenwandanordnung aufweist. Die Oberseite bildet mit der Seitenwandanordnung eine Art Becher, dessen Rand zu jener Auflagefläche zeigt, auf der das Vakuumspannelement aufgesetzt wird. Die Vakuumspannelemente haben einen sechseckigen Grundriß, so daß sie mit entsprechenden planen Seitenwandabschnitten aneinander angelegt werden können.

Sowohl in der Oberseite als auch in jedem Seitenwandabschnitt befindet sich jeweils eine Öffnung, durch die hindurch eine strömungsmäßige Verbindung mit dem Innenraum des Vakuumspannelementes hergestellt werden kann. Mehrere Vakuumspannelememente werden dadurch aneinander befestigt, daß durch die miteinander fluchtenden Öffnungen in den Seitenwandabschnitten Hohlschrauben eingesetzt werden, die die Elemente einerseits aneinander befestigen und andererseits die strömungsmäßige Verbindung gewährleisten.

Diese Art der Verbindung der Vakuumelemente untereinander setzt eine freie Zugänglichkeit der Innenseite jeder Seitenwandanordnung voraus, weshalb die Vakuumspannelemente nach unten zwangsläufig offen sein müssen. Dies wiederum erfordert eine Abdichtung der Vakuumspannelement in Richtung auf die Auflagefläche, auf der sie im Gebrauch aufliegen und die gleichzeitig eine Wand bildet, damit unterhalb des Werkstückes das gewünschte Vakuum hervorgerufen werden kann, wenn die so abgeschlossenen Kammern eine Unterdruckquelle angeschlossen werden.

Die plane Oberfläche der Oberseite vermindert die mögliche Anpreßkraft, denn je weiter ein betrachtetes Flächenelement von der Bohrung in der Oberseite entfernt ist, umso geringer ist, wie die Praxis gezeigt hat, dort die Wirkung des Vakuums, weil die in Richtung auf die Bohrung weiter benachbarten Flächenelemente des Werkstücks und der Oberseite gleichsam als Dichtung und Abschirmung für weiter abgelegene Flächenelemente wirken.

Bei einem anderen gezeigten Ausführungsbeispiel ist jedes Vakuumelement von einer ringförmigen hutartigen Dichtung umgeben, die über die Oberseite des Vakuumspannelements übersteht. Diese Dichtung vermindert wegen ihrerer Nachgiegbigkeit die Spanngenauigkeit und ermöglicht es dem Werkstück, sich im Bereich zwischen den Dichtungen erheblich durchzubiegen, weil es dort hohl liegt.

Die bekannte Vakuumspannplatte eignet sich deswegen auch nur für Bearbeitungsvorgänge mit relativ geringen Anforderungen an die Bearbeitungspräzision und/oder Haltekraft.

Die DE-A-40 00 099 zeigt eine Vakuumspannvorrichtung mit einer planen Deckplatte, die an ihrer Unterseite mit einem Raster aus Stege bildenden Leisten versehen ist. Diese Stege sind genauso hoch wie an der Deckplatte angeformte, in dieselbe Richtung wie die Stege weisende Seitenwände. Die von der Deckplatte, den Seitenwänden und den Stegen gebildeten Kammern sind nach unten durch eine Bodenplatte verschlossen, die mit den Seitenwänden und den Stegen verbunden ist. Hierdurch entstehen Kammern, die mittels Durchbrüchen in den Stegen miteinader in Verbindung stehen. Jeweils zwischen benachbarten Stegen befindet sich in der Deckplatte eine Öffnung, die ein Ventilverschlußglied aufnimmt, das mittels einer Feder in die Verschlußstellung vorgespannt ist. Diese Feder stützt sich am Boden der Vakuumspannvorrichtung ab und bewirkt, daß das Ventilverschlußglied nach oben über die plane Oberseite der Deckplatte übersteht.

Sobald ein Werkstück auf die Werkumspannvorrichtung aufgelegt wird, werden alle im Grundriß des Werkstücks vorhandenen Ventilverschlußglieder gegen die Wirkung der Feder nach unten gedrückt, so daß die strömungsmäßige Verbindung zwischen dem Innenraum der Vakuumspannvorrichtung und der Oberseite an jenen Stellen hergestellt wird, an denen sich das Werkstück befindet.

Mit Hilfe einer an die Vakuumspannvorrichtung angeschlossenen Unterdruckquelle wird der Unterdruck erzeugt, der das Werkstück im Bereich der geöffneten Ventile auf der Vakuumspannvorrichtung festsaugen soll.

Wegen der glatten Ausbildung der Oberseite gelten hinsichtlich der Haltekraft die oben bereits gemachten Ausführungen. Die bekannte Vakuumspannvorrichtung eignet sich deswegen auch nur für Bearbeitungsvorgänge, die nur verhältnismäßig geringe Bearbeitungskräfte hervorrufen.

Ein Kupplung mehrerer Spannplatten ist nicht vorgesehen.

Ausgehend hiervon ist es Aufgabe der Erfindung, eine Vakuumspannplatte zu schaffen, die modular oder baukastenartig an die jeweiligen Erfordernisse angepaßt werden kann, um sowohl an kleine als auch an große Bearbeitungsmaschinen angepaßt zu werden.

Zur Lösung dieser Aufgabe weist die neue Vakuumspannplatte die Merkmale des Anspruches 1 auf.

Weil die neue Vakuumspannplatte aus wenigstens zwei modulartig zusammengesetzten Teilspannplatten besteht, die an das spezielle Erfordernis der Erweiterung angepaßt sind, können Vakuumspannplatten nahezu beliebiger Größen zusammengestellt werden. Der Benutzer der Vakuumspannplatten ist nicht mehr auf ein seitens des Herstellers festgelegtes Maß eingeschränkt, das für einige Anwendungen zu klein und für andere Anwendungen zu groß ist. Außerdem werden dadurch für den Benutzer erhebliche Kosten gespart, denn der Preis der Vakuumspannplatte wird in erheblichem Maße von der Größe der mit dem Waffelmuster versehenen Spannfläche bestimmt.

Um den modulartigen Zusammenbau zu ermöglichen, hat jede Teilspannplatte in der oder den Seitenwänden, die zum Anschluß weiterer Teilspannplatten vorgesehen ist bzw. sind, Verbindungskanäle, um das Vakuum von einer Teilspannplatte zur anderen Teilspannplatte weiterzuleiten. Eine aufwendige Kupplung über externe Schläuche oder Rohrleitungen entfällt dadurch vollständig.

Außerdem gestaltet sich das Aufsetzen der Werkstücke sehr einfach, weil jede Teilspannplatte wenigstens ein Ventil enthält, über das das Nutenraster mit der Kammer im Inneren der Teilspannplatte verbunden ist. Das Ventil hat ein Betätigungsglied und wird hierüber von dem aufgesetzten Werkstück betätigt bzw. geöffnet. Damit ist bei nicht aufgesetztem Werkstück das Ventil automatisch geschlossen und es können keine Leckagen auftreten, die das Vakuum beeinträchtigen oder dazu führen, daß beispielsweise Kühlflüssigkeit in das Vakuumsystem eingesaugt wird. Andererseits ist der Benutzer aber auch nicht gezwungen, je nach Bedarf umständlich Öffnungen im Nutenraster unterhalb des Werkstücks zu öffnen oder zu schließen. Fehlbedienungen sind hierdurch ausgeschlossen.

Diese Form des selbsttätigen Anschlusses des jeweiligen Nutenrasters an das Vakuumsystem ist deswegen besonders wichtig, weil wegen der Aufteilung der gesamten Vakuumspannplatte auf einzelne Teilspannplatten das Nutenraster sich zwangsläufig nicht über die Grenze zwischen zwei benachbarten Teilspannplatten fortsetzen kann. Vielmehr müssen auf den einzelnen Teilspannplatten, die die gesamte Vakuumspannplatte bilden, einzelne Vakuumfelder erzeugt werden, deren Grenzen möglichst nahe an der Grenze zwischen zwei benachbarten Teilspannplatten liegt, was mit Hilfe einer durchlaufenden Leiste erreicht wird, deren Höhe im übrigen den Erhöhungen, die im übrigen durch das Nutenraster abgeteilt sind, entspricht. Andernfalls würde die Vakuumfläche unnötig klein werden, was die Haltekraft beeinträchtigt, weil bei Vakuumspannsystemen die Haltekraft der vom Vakuum beaufschlagten Fläche bekanntlich proportional ist.

Außerdem verhindert diese Leiste Fehlanwendungen, die dadurch entstehen, daß der Benutzer versucht, die erforderliche Gummidichtschnur über die Grenze zwischen zwei Teilspannplatten hinwegzulegen. Der nicht luftdichte Stoß zwischen zwei benachbarten Vakuumspannplatten würde dann zwangsläufig Leckagen hervorrufen, die in gefährlicher Weise das Vakuum unterhalb des Werkstückes beeinträchtigen.

Besonders günstige Verhältnisse beim Zusammensetzen der Vakuumspannplatte aus Teilspannplatten ergeben sich, wenn als Grundmuster die Sechseckform verwendet wird. Es gestattet die lückenlose beliebige Vergrößerung der wirksamen Fläche der daraus aufgebauten Spannplatte.

Eine weitere Verbesserung ist zu erreichen, wenn Teilspannplatten vorgesehen werden, die insbesondere am Rand der modular zusammengesetzten Vakuumspannplatte eingesetzt werden und die derart fünfeckig sind, daß eine Seite zum Anschluß an ein sechseckiges Grundmuster geeignet ist, während der Abstand zwischen zwei zueinander parallel Seitenwänden dem Abstand zweier zueinander paralleler Seitenwände an dem Grundmuster der Teilspannplatte entsprechen. Auf diese Weise läßt sich trotz im Grunde genommen sechseckigem Grundmuster eine rechteckige Vakuumspannplatte aufbauen, wobei wiederum an den Rändern der erhaltenen zusammengesetzten Vakuumspannplatte zusätzliche T-Nuten vorhanden sind, um Anschläge zum Positionieren bzw. zum Sichern der aufgesetzten Werkstücke anzuschrauben, ohne hierdurch die Vakuumaufspannung zu erschweren.

Die in der Teilspannplatte vorgesehene Kammer besteht im einfachsten Falle aus einer kreisförmigen Ausnehmung, in die radial eine Schulter vorspringt, um mit Hilfe dieser Schulter einen Deckel für die Kammer abgedichtet zu halten. Von der Kammer gehen dann strahlenförmig die einzelnen Verbindungskanäle aus. Außerdem hat diese Anordnung den Vorteil, daß der Deckel aus einem anderen Material wie der Grundkörper der Teilspannplatte gefertigt werden kann. Der Grundkörper besteht aus Gründen der Gewichtsersparnis zweckmäßigerweise aus einem Leichtmetall, so daß mit Hilfe eines aus einem ferromagnetischen Material gefertigten Deckel die Vakuumspannplatte in einfacher Weise auf einer Magnetspannplatte befestigt werden kann, was insbesondere bei Anwendungen auf Schleifmaschinen vorteilhaft ist.

Die Kuppelbarkeit der Teilspannplatten wird erleichtert, wenn die Bohrungen, in denen die Verbindungskanäle an den betreffenden Seitenwänden enden, etwa auf dem Mittelpunkt der Diagonalen der rechteckigen Seitenwände liegen bzw. bei fünfeckigen Platten an der langen Seitenwand in einem Abstand von der Ecke, der dem Abstand dieser Bohrungen von den Ecken bei sechseckigen Teilspannplatten entspricht.

Eine weitere Vereinfachung kann erreicht werden, wenn diese Bohrungen Stufenbohrungen sind, in denen abgedichtet Rohrstücke eingesetzt sind, um benachbarte Teilspannplatten sowohl strömungsmäßig als auch mechanisch miteinander zu verbinden. Dadurch werden zusätzliche Halteelemente, die die Teilspannplatten aneinander sichern, eingespart, was insbesondere bei jenen Teilspannplatten von Bedeutung ist, die bei großen Vakuumspannplatten keine Seitenfläche haben, die am Rand der zusammengesetzten Vakuumspannplatte liegt. Falls die Höhenjustierung durch die eingesetzten Rohrstücke nicht hinreichend eng toleriert ist, können zusätzlich in den Seitenwänden eine oder mehrere Paßbohrungen zur Aufnahme von Paßstiften enthalten sein. Diese sichern dann lediglich die zusammengefügten Teilspannplatten gegen Bewegungen in Richtung parallel zu den Seitenwänden, während die Sicherung senkrecht zu den betreffenden Seitenwänden, wie erwähnt, durch die Rohrstücke erfolgt, über die die Vakuumkammern miteinander verbunden sind.

Die Fixierung der Rohrstücke in den Bohrungen geschieht im einfachsten Falle mit von der Unterseite der Teilspannplatte eingedrehten Schrauben, vorzugsweise Stiftschrauben. Deren zugespitztes Ende wirkt mit Nuten in diesen Rohrstücken zusammen und drückt die Rohrstücke gegen den Grund der Stufenbohrung. An dieser Stelle kann auch gleichzeitig sehr einfach die Abdichtung vorgenommen werden, wenn die hierfür vorgesehenen O-Ringe nicht in Nuten der Rohrstücke gekammert werden sollen.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
- Fig. 1: zwei Teilspannplatten in auseinandergezogenem Zustand, in einer perspektivischen Darstellung,
- Fig. 2: die Verbindung zwischen benachbarten Teilspannplatten nach Fig. 1, in einer geschnittenen Explosionsdarstellung,
- Fig. 3: eine andere Grundform der Teilspannplatten, die in Verbindung mit den Teilspannplatten nach Fig. 1 verwendbar ist, in einer perspektischen Darstellung,
- Fig. 4: eine weitere Kombination von Teilspannplatten in einer auseinandergezogenen Form und in einer Draufsicht,
- Fig. 5: ein in eine Teilspannplatte einsetzbares Verbindungsstück zum Anschluß einer externen Vakuumquelle, in einer Seitenansicht und

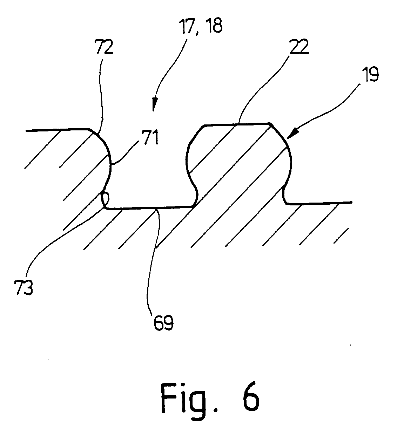

- Fig. 6: einen Querschnitt durch eine der Nuten des Nutenrasters.

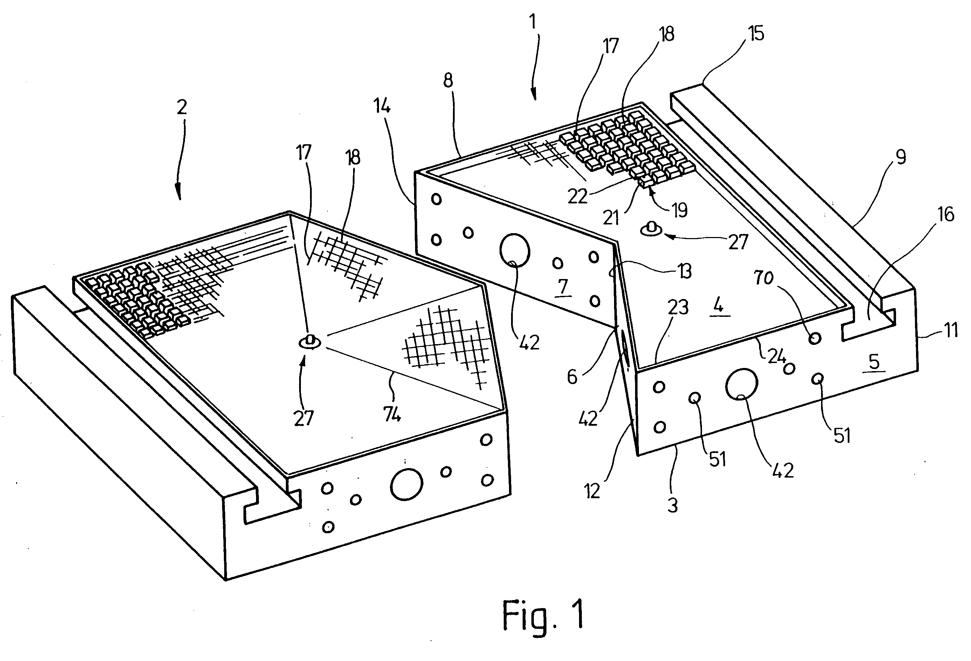

Fig. 1 zeigt zwei Teilspannplatten 1 und 2, die zu einer Vakuumspannplatte zusammengefügt werden können. Die beiden Teilspannplatten 1 und 2 haben, abgesehen von einem unterschiedlichen Grundriß, denselben Aufbau, weshalb für die einander entsprechenden Teile dieselben Bezugszeichen verwendet werden und sich die nachfolgende Figurenbeschreibung zunächst ausschließlich auf die Teilspannplatte 1 bezieht.

Die Teilspannplatte 1 weist eine vom Betrachter weggewandte, im wesentlichen ebene Unterseite 3 sowie parallel und im Abstand dazu eine Oberseite 4 auf. Zwischen der Oberseite 4 und der Unterseite 3 erstrecken sich jeweils rechtwinklig dazu insgesamt fünf Seitenflächen 5, 6, 8 und 9, die an Ecken 11, 12, 13 und 15 ineinander übergehen. Dabei beträgt der Winkel, den die Seitenflächen 8 und 9 an der Ecke 15 miteinander einschließen, 90°, ebenso wie der Winkel, den die Seitenflächen 5 und 9 bei der Ecke 11 miteinander begrenzen. Hingegen ist der Winkel zwischen den Seiten 3 und 6 bzw. zwischen den Seitenflächen 7 und 8 an den Ecken 12 und 14 jeweils 60°, so daß der Winkel bei der Ecke 13 240° beträgt, d.h. es entsteht hier eine konkave Einbuchtung der Teilspannplatte 1. Die Seitenflächen 3...9 sind ebene glatte Flächen ohne Vorsprünge.

In der Oberseite 4 befindet sich, der Seitenfläche 9 benachbart und zu dieser parallel verlaufend, eine T-Nut 16, die sich nach oben öffnet und sowohl die Seitenfläche 5 als auch die Seitenfläche 8 durchsetzt.

Auf der von der Seitenfläche 9 abliegenden Seite der T-Nut 16 befindet sich in der Oberseite 4 ein Gitter von gleichen Nuten, das von einer Gruppe von Nuten 17 sowie einer Gruppe von Nuten 18 gebildet wird. Die Nuten 18 haben jeweils voneinander den gleichen Abstand und liegen zu den Seitenflächen 5 und 8 parallel, während die ebenfalls äquidistant verteilten Nuten 17 zu der Seitenfläche 9 parallel verlaufen. Hierdurch entstehen in der Oberseite 4 kleine pyramidenstumpfförmige Erhöhungen 19 mit quadratischem Grundriß, die von insgesamt vier kleinen Seitenflächen 21 sowie einer oberen, ebenfalls quadratischen Plateaufläche 22 begrenzt werden. Sämtliche Plateauflächen 22 liegen in einer gemeinsamen Ebene, die auch die Flächenbereiche enthält, die an die Ränder der T-Nut 16 an der Oberseite 4 angrenzen. Diese Plateauflächen 22 bilden die eigentliche Auflagefläche für ein aufzuspannendes Werkstück.

Allerdings führen die Nuten 17 und 18 nicht ganz bis zu den Seitenflächen 5, 6, 7 und 8 und sie enden auch im Abstand von dem Rand der T-Nut 16, so daß eine schmale Leiste 23 entsteht, die als geschlossener Polygonzug das Feld der pyramidenstumpfförmigen Erhöhungen 19 vollständig und ohne Unterbrechung einrahmt. Dabei ist die Oberseite dieser Leiste 23, deren jeweils zur Außenseite der Teilspannplatte 1 gelegene Fläche von der betreffenden Seitenwand 5...9 gebildet wird, wiederum in der Ebene der Plateauflächen 22. Mit anderen Worten, die an sich plane Oberseite 4 ist von den Nuten 17 und 18 durchzogen und dadurch in kleine Flächenbereiche aufgeteilt.

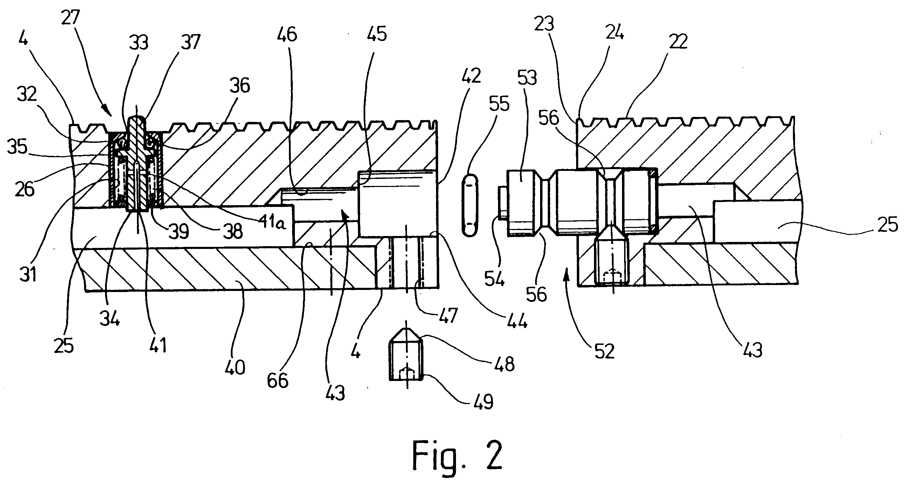

Die Oberseite 4 enthält in der Mitte zwischen den Seitenflächen 5 und 8 sowie etwa mittig zwischen der Ecke 13 sowie der weitesten Stelle der T-Nut 16 eine in Fig. 2 erkennbare nach unten in eine Kammer 25 führende Bohrung 26. In dieser Bohrung 26 sitzt ein Ventil 27. Dieses Ventil 27 besteht aus einem im wesentlichen außen zylindrischen Ventilgehäuse 28, das auf der Außenumfangsfläche ein in der Zeichnung nicht dargestelltes Feingewinde trägt, mit dem es in ein Gewinde der Bohrung 26 gasdicht eingeschraubt ist. Innerhalb des Ventilgehäuses 28 ist eine Bohrung 31 enthalten, die sich zu der Oberseite 4 über eine kegelstumpfförmige Schulter 32 auf einen Bohrungsabschnitt 33 mit kleinerem Durchmesser verjüngt. In der Bohrung 31 steckt längsverschieblich ein im wesentlichen zylindrisches Ventilverschlußglied 34, das etwa auf der Mitte einen Ringbund 35 trägt. Der Ringbund 35 dient dazu, eine O-Ringdichtung 36 gegen die kegelstumpfförmige Schulter 32 anzupressen, um den Strömungsweg aus dem Bohrungsabschnitt 33 zu der Bohrung 31 zu unterbrechen.

Das Ventilverschlußglied 34 setzt sich über den Ringbund 35 nach oben in einem zylindrischen Zapfen 37 fort, der mit seinem freien Ende geringfügig über die von der Oberseite 4 definierte Ebene hervorsteht.

Gegen die Unterseite des Ringbundes 35 wirkt eine Druckfeder 38, die sich andernends an einer in die Bohrung 31 eingepreßte ringförmige Scheibe 39 abstützt.

Um den Gasdurchtritt durch das geöffnete Ventil 27 zu verbessern, ist das Ventilverschlußglied 34 unterhalb des Ringbundes 35 mit einer Sackbohrung 41 versehen, die ebenfalls noch unterhalb des Ringbundes 35 von einer Querbohrung 41a durchsetzt ist.

Die Bohrung 26 bildet somit einen Kanal, über den absperrbar durch das Ventil 27 die Oberseite 4 mit der Kammer 25 strömungsmäßig verbindbar ist. Außerdem ist die Kammer 25, die zu der Unterseite 3 mit einem aufgeschraubten planen Deckel 40 verschlossen ist, über je einen weiteren Kanal mit den Seitenflächen 5, 6, 7 und 8 verbunden. Die Mündung dieses jeweiligen Verbindungskanals wird von einer zugehörigen Öffnung 42 gebildet. Der von der Öffnung 42 weg führende Verbindungskanal besteht aus einer Stufenbohrung 43, die entweder unmittelbar in die kreisförmige Kammer 25 einmündet bzw. zu dieser radial verläuft oder die in eine zweite, nicht gezeigte Hilfsbohrung mündet, die ihrerseits zu der Kammer 25 führt. Beispielsweise können die Bohrungen 43, die von den beiden Seitenflächen 5 und 8 ausgehen, direkt in die Kammer 25 einmünden, während die von den Seitenflächen 6 und 7 ausgehenden Stufenbohrungen 43 in eine nicht weiter dargestellte und durch einen ebenfalls nicht veranschaulichten Verschlußstopfen verschlossene Bohrung münden, die von der Seitenfläche 5 bzw. 8 ausgehend angebracht ist. Wichtig dabei ist nur, daß der unmittelbar an die Öffnung 42 angrenzende Bereich der betreffenden Bohrung 43 die in Fig. 2 erkennbare Gestalt hat. So besteht die Stufenbohrung 43 im Anschluß an die Mündung 42 aus einem Abschnitt 44 mit großem Durchmesser, der an einer planen Ringschulter 45 in einen Bohrungsabschnitt 46 mit kleinerem Durchmesser übergeht. Der Abstand der Ringschulter 45 von der Mündung 42, d.h. von der zugehörigen Seitenfläche 5...8 ist jeweils immer gleich.

Von der Unterseite 3 her dringt eine durchgehende Gewindebohrung 47 in den Bohrungsabschnitt 44 ein. Die Gewindebohrung 47 dient der Aufnahme einer mit einer Spitze 48 versehenen Stiftschraube 49.

Die Lage der Mündungen 42 in jeder Seitenfläche 5...8 ist so gewählt, daß, wenn zwei Teilspannplatten 1, 2 mit ihren betreffenden Seitenflächen deckungsgleich aneinander anliegen, die Mündungen 42 und die davon rechtwinklig ausgehenden Bohrungen 43 miteinander fluchten. Dies bedeutet, daß die Mitte der Mündung 42, beispielsweise in der Seitenfläche 7, auf dem Schnittpunkt der Diagonalen der rechteckigen Seitenfläche 7 liegt. Folglich hat die Öffnung 42 in der Seitenfläche 3 bzw. der Seitenfläche 8 von der benachbarten Ecke 12 oder 14 denselben Abstand wie die Mündung 42 in der Seitenfläche 6 oder 7 von dieser Ecke 12 oder 14.

Außerdem sind ebenfalls symmetrisch verteilt neben jeder Mündung 42 zwei Paßbohrungen 51 vorhanden, in die nicht veranschaulichte Paßstifte weitgehend spielfrei eingesteckt sind.

Um Teilspannplatten 1, 2 miteinander zu kuppeln, sind Kupplungs- oder Verbindungselemente 52 vorgesehen, die aus einem im wesentlichen zylindrischen Rohrstück 53 bestehen. Das Rohrstück 53 ist an seinen beiden Stirnenden abgesetzt, so daß ein zylindrisches Ansatzstück 54 kleineren Durchmessers entsteht, dessen Außendurchmesser der lichten Weite eines darauf zentrierten O-Rings 55 entspricht und der kürzer ist als der O-Ring 55 dick.

Im Abstand von den Stirnflächen enthält der zylindrische Grundkörper 53, dessen Außendurchmesser der lichten Weite des Bohrungsabschnittes 44 ist, zwei trapezförmige Ringnuten 56, deren relative Lage sich im einzelnen aus der nachfolgenden Funktionsbeschreibung ergibt.

Nicht benötigte Mündungen 42 werden durch Verschlußstopfen abgedichtet, die die äußere Gestalt eines "halben" Kupplungsstücks 52 haben und nicht, wie das Kupplungsstück 52 als Rohr, sondern als Vollkörper ausgeführt sind.

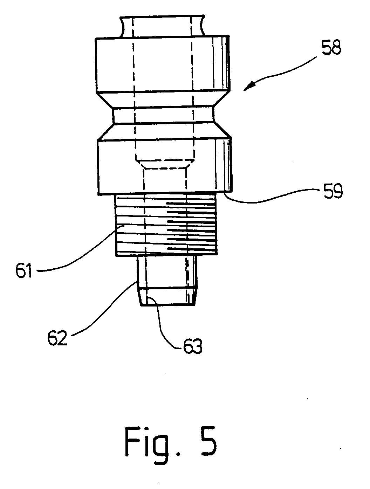

Um die Teilspannplatte 1 oder eine daraus aufgebaute Vakuumplatte an eine Vakuumquelle anzuschließen, wird das in Fig. 5 veranschaulichte Anschlußstück 58 verwendet. Es hat, soweit es sich um den in dem Bohrungsabschnitt 44 sitzenden Abschnitt handelt, dieselbe Gestalt wie das "halbe" Kupplungsstück 52, weshalb insoweit dieselben Bezugszeichen verwendet sind. Anstelle der anderen Hälfte des Kupplungsstücks 52 ist auf der betreffenden Stirnseite 59 ein Gewindeansatz 61 vorgesehen, der in einen Nippel 62 mit kleinerem Durchmesser übergeht. Das gesamte Kupplungsstück 58 wird von einer Bohrung 63 durchsetzt.

Von der Teilspannplatte 1 unterscheidet sich die Teilspannplatte 2, wie die Fig. 1 zeigt, lediglich darin, daß der Winkel der Seitenflächen 6 und 7 an der Ecke 13 nicht 240°, sondern 120° beträgt, womit die Ecke 13 nach außen vorsteht und nicht, wie bei der Teilspannplatte 1, nach innen zurückversetzt ist. Dementsprechend sind die Innenwinkel an den Ecken 12 und 14 auch nicht, wie vorher 60°, sondern 120°. Schließlich verlaufen in gedachten Sektoren, die von den Ecken 12 und 13 sowie dem Ventil 27 bzw. 13 und 14 sowie dem Ventil 27 begrenzt sind, die Nuten 17 rechtwinklig zu der betreffenden Seitenwand 7 oder 6, während die Nuten 18 zu dieser Seitenwand 6 oder 7 parallel sind.

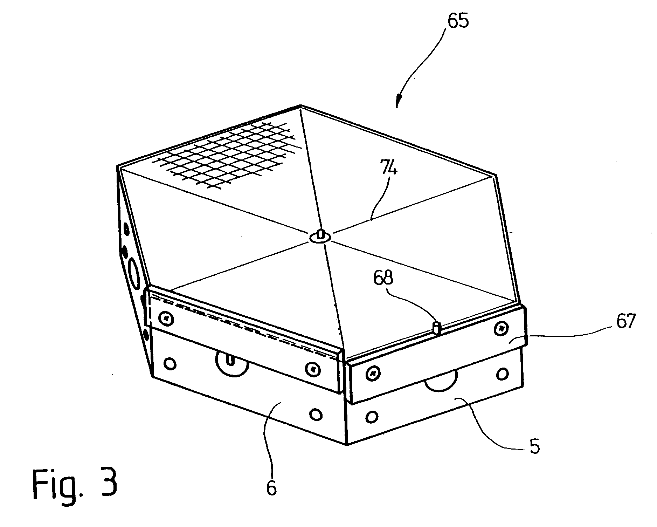

Abgesehen von den in Fig. 1 gezeigten fünfeckigen Teilspannplatten 1 und 2 ist bei der neuen Ausführungsform einer Vakuumspannplatte noch eine in Fig. 3 gezeigte sechseckige Teilspannplatte 65 vorgesehen, deren Grundriß die Gestalt eines regulären Sechsecks hat. Auch diese Teilspannplatte 65 wird von einer Oberseite 4 sowie einer Unterseite 3 begrenzt, die zu der Oberseite 4 parallel ist. Die Dicke der Teilspannplatte 65, d.h. der Abstand der auf der Oberseite 4 ausgebildeten Plateauflächen 22 von der Unterseite 3 ist genauso groß wie bei den Teilspannplatten 1 und 2 aus Fig. 1. Unterschiedlich ist, abgesehen von dem geänderten Eckenwinkel, lediglich die Tatsache, daß an allen Seitenflächen 5...10, die untereinander gleich sind, Mündungen 42 vorhanden sind, von denen aus Stufenbohrungen 42 in die im Inneren der Teilspannplatte 65 befindliche Kammer 25 führen.

Die insoweit beschriebenen Teilspannplatten 1, 2 und 65 lassen sich wie folgt zu einer Vakuumspannplatte nahezu beliebiger Größe zusammensetzen:

Es sei zunächst angenommen, daß lediglich die beiden Teilspannplatten 1 und 2 aus Fig. 1 miteinander gekuppelt werden. Zu diesem Zweck werden in die Paßbohrungen 51,beispielsweise der Seitenfläche 7, zylindrische Paßzapfen eingesetzt. In die Mündung 42 derselben Seitenfläche wird, wie dies Fig. 2 veranschaulicht, das Kupplungsstück 52 unter Zwischenlage eines O-Rings 55 eingesteckt und sodann die Stiftschraube 49 angezogen. Diese dringt mit ihrer Spitze 48 in die Nut 56 ein, wobei durch das Anziehen der Stiftschraube 49 aufgrund des Zusammenwirkens der Spitze 48 mit der entsprechend abgeschrägten Nut 56 das Kupplungsstück 52 gegen die benachbarte Schulter 45 vorgeschoben wird. Dadurch wird der O-Ring 55 zwischen dem Kupplungsstück 52 und der Ringschulter 45 dichtend zusammengepreßt. Gleichzeitig entsteht auch eine formschlüssige Verriegelung zwischen der Teilspannplatte 1 und dem in die Seitenwand 7 eingesteckten Kupplungsstück 52. Diese Position ist in Fig. 2, rechte Seite, veranschaulicht.

Die Mündung 42 in der Seitenfläche 6 wird in ähnlicher Weise durch einen Verschlußstopfen abgedichtet, der, wie oben erwähnt, das Aussehen eines "halben" Kupplungsstücks 52 hat und massiv ausgeführt ist. Nach dem Einsetzen dieses Verschlußstopfens in die Mündung 42 steht der Verschlußstopfen nicht über die betreffende Seitenfläche 6 über. Als nächstes wird bei der Teilspannplatte 2 die Mündung 42 in der Seitenfläche 7 (sie liegt in der in Fig. 1 gezeigten Stellung der Seitenfläche 6 der Teilspannplatte 1 gegenüber) in derselben Weise wie bei der Teilspannplatte 1 erläutert, verschlossen. Hingegen bleibt die Mündung 42 in der Seitenfläche 6 (sie liegt der Seitenfläche 7 der Teilspannplatte 1 gegenüber) offen.

Nachdem insoweit die beiden Teilspannplatten 1 und 2 vorbereitet sind, wird die Teilspannplatte 2 mit der noch unverschlossenen Mündung 42 auf das aus der Seitenfläche 7 vorstehende Kupplungsstück 52 aufgeschoben, das in die betreffende Stufenbohrung 43 eindringt. Gleichzeitig gleiten auch die beiden eingesetzten Paßbolzen in die zugehörigen Paßbohrungen 51 der Teilspannplatte 2.

Fig. 2 zeigt die einander gegenüberstehenden Seitenflächen 6 und 7 unmittelbar vor dem Zusammenstecken. Sobald das Zusammenstecken erfolgt ist, wird, wie vorerwähnt, von der Unterseite her die Stiftschraube 49 in die zugehörige Gewindebohrung 47 eingedreht, um das Kupplungsstück 52 auch in der anderen Teilspannplatte 2 formschlüssig festzulegen und gegen die betreffende Ringschulter 52 anzupressen. Nach erfolgtem Anziehen der Stiftschraube 49 sind die beiden Teilspannplatten 1 und 2 formschlüssig mechanisch miteinander verbunden und außerdem besteht über das Kupplungsstück 52 eine strömungsmäßige Verbindung zwischen den beiden Kammern 25 der beiden Teilspannplatten 1 und 2. Die Lage der Nuten 56 und die Länge des Kupplungsstücks 52 ist dabei so bemessen, daß beim Anziehen der Stiftschrauben 49 einerseits sichergestellt ist, daß die O-Ringe 55 zwischen den Teilspannplatten 1 und 2 und dem Kupplungsstück 52 eingeklemmt sind. Andererseits liegen in dieser Stellung auch die beiden Teilspannplatten 1 und 2 mit ihren Seitenflächen 6 und 7 fugenfrei auf Stoß aneinander an. Dabei dringt die vorstehende Ecke 13 der Teilspannplatte 2 in die nach innen zurückspringende Ecke 13 der Teilspannplatte 1 ein. Es wird eine Vakuumspannplatte erreicht, die einen rechteckigen Grundriß hat, wobei die Oberseiten 4 und die Unterseiten 3 der beiden Teilspannplatten 1 und 2 miteinander bündig sind. Ebenso geht die Seitenfläche 5 glatt und ohne Sprung in die Seitenfläche 8 der jeweils anderen Teilspannplatte 1 oder 2 über.

Falls dies nicht bereits vorher geschehen ist, können nun auch die in den Seitenflächen 5 und 8 enthaltenen Mündungen 42 bis auf eine, wie oben beschrieben, durch Verschlußstopfen gasdicht verschlossen werden. Lediglich in eine der Mündungen 42 wird das in Fig. 5 gezeigte Anschlußstück eingesetzt, und zwar in der gleichen Weise, wie dies oben im Zusammenhang mit dem Kupplungsstück 52 beschrieben ist. An dieses Anschlußstück 58 kann nun in bekannter Weise eine zu einer Vakuumquelle führende Leitung angeschlossen werden.

Die insoweit vorbereitete Vakuumspannplatte kann nun auf dem Maschinentisch einer Werkzeugmaschine, beispielsweise mit Spannpratzen oder einer Magnetspannplatte, befestigt werden.

Um nun auf der Vakuumspannplatte ein Werkstück festzusetzen, wird in die Nuten 17 und 18 der beiden Teilspannplatten 1 und 2 jeweils eine Gummischnur eingelegt, die der Außenkontur des festzuspannenden Werkstücks entspricht. Wegen des Stoßes zwischen den beiden Teilspannplatten 1 und 2 wird jedoch die Gesamtfläche des Werkstücks auf zwei Felder aufgeteilt, wobei sich das eine Feld auf der einen Teilspannplatte und das andere Feld auf der anderen Teilspannplatte befindet. Die umlaufende Leiste 23 vereinfacht dabei das einlegen der Dichtung an der Stoßstelle zwischen den beiden Teilspannplatten 1 und 2. Dabei muß lediglich sichergestellt werden, daß jedes von einer Dichtschnur umschlossene Feld auch auf der betreffenden Teilspannplatte 1, 2 das dort vorhandene Ventil 27 umfaßt. Wenn nun das Werkstück auf die Vakuumspannplatte aufgesetzt wird, drückt es über den Zapfen 37 das Ventilverschlußglied 34 nieder, wodurch die strömungsmäßige Verbindung zwischen der Unterseite des Werkstücks und der Vakuumkammer 25 hergestellt ist. Die an die Teilspannplatten 1, 2 angeschlossene Vakuumquelle kann nun wirksam werden, um das Werkstück auf die Oberseite 4 niederzuziehen und festzuhalten. Da über das Kupplungsstück 52 nicht nur die formschlüssige mechanische Verbindung zwischen den Teilspannplatten 1 und 2 hergestellt wird, sondern auch die strömungsmäßige Verbindung, herrscht in allen Vakuumkammern 25 aller Teilspannplatten 1 und 2 dasselbe Vakuum, ohne daß außen zusätzliche Leitungen angeschlossen werden müssen.

Falls eine lediglich aus den Teilspannplatten 1 und 2 gemäß Fig. 1 zusammengesetzte Vakuumplatte zu klein sein sollte, ist es zunächst ohne weiteres möglich, neben den Teilspannplatten 1 und 2, also an den Seitenflächen 5 und 8 weitere Teilspannplatten 1 und 2 anzusetzen, wobei diese beiden weiteren Teilspannplatten 1 und 2 untereinander so verbunden werden, wie dies oben beschrieben ist. Der Anschluß an die Teilspannplatten 1 und 2 nach Fig. 1 geschieht dann zweckmäßigerweise durch Kupplungsstücke 52, die sowohl in der Seitenfläche 5 als auch in der Seitenfläche 8 eingesetzt sind, um möglichst viele formschlüssige Verbindungen zu erzeugen. Gleichzeitig wird jedes Mal auch die strömungsmäßige Verbindung hergestellt.

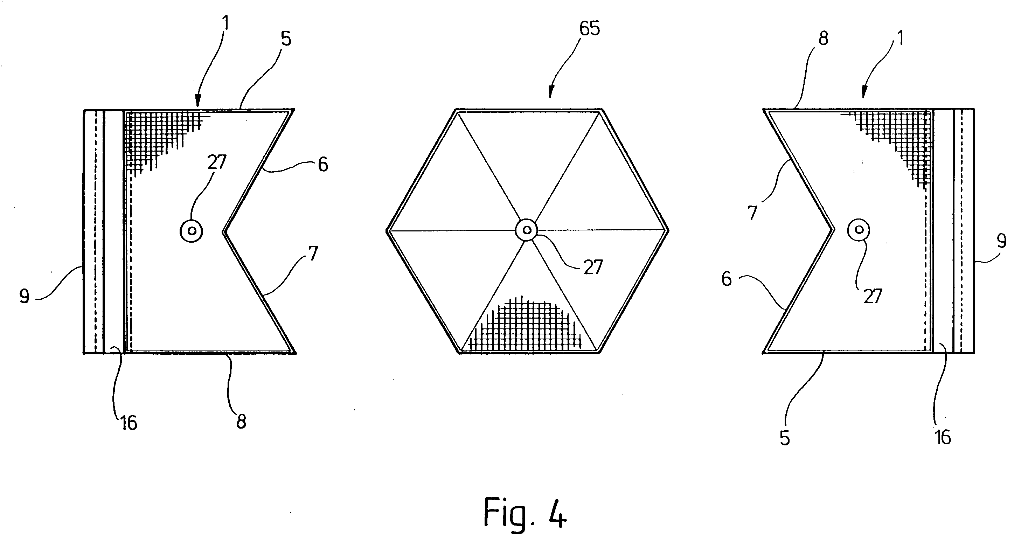

Aber nicht nur eine Verlängerung in Richtung parallel zu der Längserstreckung der T-Nuten 16 ist möglich, sondern auch eine Verbreiterung, wozu in der einfachsten Ausführungsform, beispielsweise die in Fig. 4 gezeigte Konfiguration verwendet wird. In diesem Falle werden zwei Teilspannplatten 1 mit einer Teilspannplatte 65 kombiniert. Die mechanische Verbindung an den Stoßstellen geschieht wie vorher im Zusammenhang mit Fig. 1 erläutert. Dabei liegt der Vorteil des auf dem sechseckigen Grundmuster basierenden Systems, wie es in den Figuren gezeigt ist, darin, daß bei den meisten Anwendungen die Stoßstelle zwischen benachbarten Teilspannplatten nicht parallel zu den in aller Regel rechteckigen Werkstücken liegt, sondern unter einem Winkel von 120° oder 60°. Parallel zu den Werkstückkanten verlaufende Stoßstellen zwischen benachbarten Teilspannplatten würden bei dünnwandigen Teilen bis herunter zu ca. 0,5 mm Wandstärke bei spanabhebender Bearbeitung sich deutlich als Wandstärkenänderung markieren, da an der Stoßstelle das Werkstück selbst durch Vakuum nicht niedergezogen wird. An der Stoßstelle kann das Werkstück zwischen benachbarten Dichtungsabschnitten nach oben durchfedern, was bei den vorerwähnten Wandstärken, wie sie beispielsweise im Flugzeugbau auftreten, wenn aus dem vollen gefräst wird, sichtbare Wandstärkenänderungen zur Folge hat. Aus diesem Grund ist die Leiste 23 so schmal wie möglich, beispielsweise weniger als halb so breit wie die Plateaufläche 22.

Wie die Praxis zeigt, ergibt sich ein günstiger Kompromiß zwischen der Größe der Teilspannplatte und der Anzahl der Teilspannplatten, die zum Aufbau einer Vakuumspannplatte erforderlich sind, wenn die Länge der Seitenflächen 6 und 7, gemessen zwischen zwei benachbarten Ecken, ca. 70 mm beträgt, wobei bereits bei einer Stärke der Teilspannplatte, gemessen zwischen der Ober- und der Unterseite von 40 mm hinreichende Festigkeiten erreicht werden, zumal die Vakuumkammer 25 im Inneren der Teilspannplatte 1, 2 oder 65 die Verwindungssteifigkeit nicht beeinträchtigt.

Aus Gründen der Gewichtsersparnis besteht der Grundkörper der Teilspannplatte 1, 2 oder 65 vorzugsweise aus Leichtmetall, weshalb der Deckel 40, mit dem die Vakuumkammer 25 luftdicht verschlossen wird, vorteilhafterweise aus einer entsprechend starken kreisförmigen Stahlplatte besteht, die auf eine in die Kammer 25 vorspringende Schulter 66 aufgeschraubt wird, um die aus den Teilspannplatten zusammengesetzte Vakuumspannplatte bei Bedarf auf einer Magnetspannplatte festhalten zu können.

Die an der Außenseite verlaufenden T-Nuten 16 werden, wie in der DE-PS 38 38 988 beschrieben, verwendet.

Wenn es darum geht, die Werkstücke auch im Bereich der Seitenflächen 6, 7, 5 oder 8 festzuhalten, können in diesen Seitenflächen als Sackbohrungen ausgebildete Gewindebohrungen 70 verwendet werden, an die in Fig. 3 erkennbare Anschlagleisten 67 angeschraubt werden können. Diese Anschlagleisten 67 tragen auf einer Seite einen etwa mittig nach oben stehenden Zapfen 68, mit dem sie über die Oberseite 4 überstehen. Wenn sie hingegen in der anderen Lage montiert werden, in der der Zapfen 68 nach unten zeigt, stehen sie mit ihrer gesamten Länge ober die Oberseite 4 über. Dieser Fall ist in Fig. 3 an der Seitenfläche 6 veranschaulicht, während der Fall mit nach oben weisendem Zapfen 68 in Verbindung mit der Seitenfläche 5 gezeigt ist.

Um das Selbsthalten der Dichtungsschnur in den Nuten 17 und 18 zu verbessern, können die Nuten 17 und 18 mit dem in Fig. 7 gezeigten Querschnittsprofil versehen werden, bei dem sie in der Nähe ihres Nutengrundes 69 geringfügig hinterschnitten sind. Der Querschnitt der Nuten 17 und 18 besteht aus einem gegenüber der Oberseite 4 bzw. der Plauteaufläche 22 zurückversetzten parallelflankigen Abschnitt 71, der zur Plateaufläche 22 hin in eine Fase 72 übergeht. Am unteren Ende des Abschnittes 71 ist eine geringfügige Auskolkung 73 eingefräst, bei der die Seitenwand der Nut gegenüber dem parallelflankigen Abschnitt 71 um ca. 0,1 mm bis 0,3 mm zurückspringt. Die üblicherweise verwendeten Dichtungsschnüre aus geschlossenzelligem Schaumgummi zeigen dadurch einen gewissen Selbsthalt in der Nut 17, 18 auch dann, wenn von oben keine Kräfte die Dichtung in die Nut 17, 18 niederdrücken.

Außerdem hat es sich als zweckmäßig herausgestellt, wenn die wirksame Plateaufläche etwa 3 x 3 mm im Quadrat mißt und die Nutenweite an der größten Stelle infolge der Fasenflächen 72 ebenfalls etwa 3 mm beträgt. Hierdurch wird einerseits eine gute Andruckkraft infolge des Vakuums erreicht, andererseits aber ein Eindrücken der Plateaufläche 22 in dünnwandige Werkstücke weitgehend vermieden. Aus diesem Grund sind auch an den ineinander übergehenden Nutenfeldern, die durch die dünnen ausgezogenen Linien 74 angedeutet sind, keine in Richtung dieser Linien verlaufenden Nuten enthalten. Durch sie würden unter ungünstigen Umständen Plateauflächen 22 entstehen, die die gewünschte Fläche von 0,09 cm² zu stark unterschreiten. Andererseits dürfen in den Übergangsbereichen keinesfalls solche unterdimensionierten Erhöhungen 19 fehlen, weil dann der Halt der Dichtungsschnur beeinträchtigt wäre.

## Patentansprüche

1. Vakuumspannplatte,
mit wenigstens zwei modulartig zusammensteckbaren Teilspannplatten (1,2,65), von denen jede aufweist:
eine mit einem Nutenraster (17,18) versehene Oberseite (4), bei der durch das Nutenraster (17,18) gebildete Erhöhungen (19) eine Auflagefläche für ein Werkstück bilden,
eine von der Oberseite (4) beabstandete Unterseite (3), wobei bei allen Teilspannplatten (1,2,65) der Abstand zwischen der Oberseite (4) und der Unterseite (3) gleich ist,
eine oder mehrere Seitenwände (5...9), die sich zwischen der Oberseite (4) und der Unterseite (3) erstrecken,
eine innerhalb der Teilspannplatte (1,2,65) befindliche und zu der Unterseite (3) geschlossene Kammer (25), die über wenigstens einen Kanal (26) mit dem Nutenraster (17,18) verbunden ist und von der zu der oder jeder Seitenwand (5...9) Verbindungskanäle (43) führen, um hierüber die Kammern (25) der miteinander gekoppelten Teilspannplatten (1,2,65) strömungsmäßig miteinander zu verbinden oder um hierüber eine Vakuumquelle an die Vakuumspannplatte anzuschließen, und
ein in dem zu der Oberseite (4) führenden Kanal (26) befindliches Ventil (27), das ein über die Werkstückauflagefläche überstehendes Ventilbetätigungsglied (37) enthält, das sich beim Auflegen eines Werkstücks das Ventil (27) öffnet,
mit in wenigstens einer der Teilspannplatten (1,2) in der Oberseite (4) enthaltenen T-Nut (16), die in der Nähe einer Seitenwand (9) verläuft sowie
mit wenigstens einem steckbaren Kupplungselement (52) zum starren Verbinden der wenigstens zwei Teilspannplatten (1, 2) und zum strömungsmäßigen Verbinden der Kammern (25) der Teilspannplatten (1,2,65).

2. Vakuumspannvorrichtung nach Anspruch 1, dadurch gekennzeichnet, daß eine Teilspannplatte (65) im Grundriß die Gestalt eines Sechsecks, vorzugsweise eines regulären Sechsecks aufweist.

3. Vakuumspannvorrichtung nach Anspruch 1, dadurch gekennzeichnet, daß eine Teilspannplatte (2) einen fünfeckigen Grundriß aufweist, wobei der Eckenwinkel an zwei benachbarten Ecken (11, 15) 90° und der Winkel an einer Ecke (13) die den 90° Ecken nicht benachbart ist, 120° beträgt.

4. Vakuumspannvorrichtung nach Anspruch 1, dadurch gekennzeichnet, daß eine Teilspannplatte (1) einen fünfeckigen Grundriß aufweist, wobei der Eckenwinkel an zwei benachbarten Ecken (11, 15) 90° beträgt und der Eckenwinkel an der den 90° Ecken nicht benachbarten Ecke (13) 240° beträgt.

5. Vakuumspannvorrichtung nach Anspruch 3 oder 4, dadurch gekennzeichnet, daß die Länge der Seitenflächen (6, 7) die an die Ecke (13) mit einem Eckenwinkel von 240° bzw. 120° angrenzen, untereinander gleich ist.

6. Vakuumspannvorrichtung nach Anspruch 3 oder 4, dadurch gekennzeichnet, daß die T-Nut (16) parallel zu der Seitenwand (9) verläuft, die an die beiden Ecken (11, 15) mit 90° angrenzt.

7. Vakuumspannvorrichtung nach Anspruch 1, dadurch gekennzeichnet, daß die Oberseite (4) und die Unterseite (3) an einer jeweiligen Teilspannplatte (1, 2, 65) deckungsgleich sind.

8. Vakuumspannvorrichtung nach Anspruch 1, dadurch gekennzeichnet, daß die Seitenwände (5...9) rechtwinklig zu der Ober- und der Unterseite (3, 4) einer jeweiligen Teilspannplatte (1, 2, 65) verlaufen.

9. Vakuumspannvorrichtung nach Anspruch 1, dadurch gekennzeichnet, daß die Kammer (25) in der Teilspannplatte (1, 2, 65) von einer zu der Unterseite (3) hin offenen, im Querschnitt kreisförmigen Ausnehmung gebildet ist, in die radial nach innen eine Schulter (66) vorspringt, auf die abgedichtet ein Deckel (40) aufgesetzt ist.

10. Vakuumspannvorrichtung nach Anspruch 1, dadurch gekennzeichnet, daß die Teilspannplatte (1, 2, 65) an ihrer Unterseite (3) ferromagnetisch ist.

11. Vakuumspannvorrichtung nach Anspruch 9 und 10, dadurch gekennzeichnet, daß bei der Teilspannplatte (1, 2, 65) ausschließlich der die Kammer (25) verschließende Deckel (40) ferromagnetisch ist.

12. Vakuumspannvorrichtung nach Anspruch 1, dadurch gekennzeichnet, daß die Verbindungskanäle (43) zu in den Seitenwänden (5...8) befindlichen Öffnungen (42) führen und daß die Mitte der Öffnung (42) wenigstens bei einer Seitenwand (6, 7, 8) der Teilspannplatte (1, 2, 65) auf dem Schnittpunkt der Diagonalen dieser Seitenwand (6, 7, 8) liegt.

13. Vakuumspannvorrichtung nach Anspruch 12, dadurch gekennzeichnet, daß die in den Seitenwänden (5...8) befindlichen Öffnungen (42) der Verbindungskanäle (43) von Stufenbohrungen gebildet sind, die sich in Richtung auf die Kammer (25) verjüngen.

14. Vakuumspannvorrichtung nach Anspruch 13, dadurch gekennzeichnet, daß rechtwinklig zu der Stufenbohrung (43) eine in die Stufenbohrung (43) mündende Gewindebohrung (47) vorgesehen ist, die von der Unterseite (3) der Teilspannplatte (1, 2, 65) ausgeht und im Abstand zu der von der Stufenbohrung (43) gebildeten Schulter (45) in die Stufenbohrung (43) mündet.

15. Vakuumspannvorrichtung nach den Ansprüchen 1 und 13, dadurch gekennzeichnet, daß zum strömungsmäßigen Verbinden der Kammern (25) zweier benachbarter Teilspannplatten (1, 2, 65) ein Rohrstück (52) vorgesehen ist, das in seiner Außenumfangsfläche umlaufende Ringnuten (56) enthält, die von dem Ende des rohrförmigen Verbindungsstücks (52) einen Abstand aufweisen, der dem Abstand der Schulter (45) der Stufenbohrung (43) von der Achse der Gewindebohrung (47) entspricht, derart, daß beim Eindrehen einer zugespitzten Stiftschraube (49) in die Gewindebohrung (47) das Verbindungsstück (52) auf die Schulter (45) der Stufenbohrung (43) gepreßt wird.

16. Vakuumspannvorrichtung nach Anspruch 1, dadurch gekennzeichnet, daß die Seitenwände (5...8) Paßbohrungen (51) enthalten, die bei mit entsprechenden Seitenwänden (5...8) aneinander anliegenden Teilspannplatten (1, 2, 65) miteinander fluchten und der Aufnahme von Paßbolzen dienen.

17. Vakuumspannvorrichtung nach den Ansprüchen 1 und 15, dadurch gekennzeichnet, daß das Kupplungselement (52) zum starren Verbinden wenigstens zweier Teilspannplatten (1, 2, 65) von dem in den Verbindungskanälen (43) der betreffenden Teilspannplatten (1, 2, 65) sitzenden Rohrstück (52) gebildet ist.

18. Vakuumspannvorrichtung nach Anspruch 1, dadurch gekennzeichnet, daß das Ventil (27) ein mit einer zentralen Bohrung (31) versehenes Gehäuse (28) aufweist, in dem ein Ventilverschlußglied (34) beweglich geführt ist, das das aus dem Ventilgehäuse (28) herausragende Ventilbetätigungsglied (37) trägt und daß das Ventilverschlußglied (34) federelastisch in die Schließstellung vorgespannt ist.

19. Vakuumspannvorrichtung nach Anspruch 18, dadurch gekennzeichnet, daß das Gehäuse (28) zum Durchtritt des Ventilbetätigungsgliedes (37) eine Bohrung (31) aufweist, die gleichzeitig eine Durchlaßöffnung für das Ventil (27) darstellt.

20. Vakuumspannvorrichtung nach Anspruch 19, dadurch gekennzeichnet, daß die Durchlaßöffnung (31) eine von dem Querschnitt des Ventilbetätigungsgliedes (37) abweichende und in der Fläche größere Querschnittsgestalt aufweist.

21. Vakuumspannvorrichtung nach Anspruch 1 , dadurch gekennzeichnet, daß zum Verschließen nicht benötiger Verbindungskanäle (43) lösbar einsetzbare Verschlußstopfen vorgesehen sind.

22. Vakuumspannvorrichtung nach Anspruch 21, dadurch gekennzeichnet, daß der Verschlußstopfen eine im wesentlichen zylinderförmige Gestalt aufweist und eine Umfangsnut enthält, deren Abstand von einer Stirnfläche dem Abstand der Schulter der betreffenden Stufenbohrung von der Mitte der Gewindebohrung entspricht.

23. Vakuumspannvorrichtung nach Anspruch 1, dadurch gekennzeichnet, daß zum Anschluß der Teilspannplatte (1, 2, 65) an die Vakuumquelle ein in einen der Verbindungskanäle (43) lösbar einsetzbares Verbindungsstück (58) vorgesehen ist.

24. Vakuumspannvorrichtung nach Anspruch 23, dadurch gekennzeichnet, daß das Verbindungsstück (58) zumindest in einem Abschnitt eine im wesentlichen zylindrische Gestalt aufweist, die eine Umfangsnut (56) enthält, deren Abstand von einer Stirnseite des Verbindungsstücks (58) gleich dem Abstand der Schulter (45) der Stufenbohrung (43) von der Mitte der Gebindebohrung (47) ist.

25. Vakuumspannvorrichtung nach Anspruch 1, dadurch gekennzeichnet, daß eine der Teilspannplatten (1, 2, 65) der Nutenraster (17, 18) von einer der Kontur der Teilspannplatten (1, 2, 65) folgenden Leiste (23) zumindest teilweise eingerahmt ist.

## Claims

1. Vacuum clamping plate,
with at least two clamping plate modules (1, 2, 65) which can be assembled together in a modular manner and each of which comprises:
a top surface (4) provided with a pattern of grooves (17, 18), elevations (19) formed by the pattern of grooves (17, 18) forming a bearing surface for a workpiece,
an underside (3) at a distance from the top surface (4), the distance between the top surface (4) and the underside (3) being identical for all of the clamping plate modules (1, 2, 65),
one or more side walls (5...9) extending between the top surface (4) and the underside (3),
a chamber (25) situated within the clamping plate module (1, 2, 65), closed off towards the underside (3) and connected to the pattern of grooves (17, 18) by means of at least one channel (26) and from where connecting channels (43) lead to the side wall or each side wall (5...9) in order to provide a flow connection between the chambers (25) of the clamping plate modules (1, 2, 65) coupled together or in order to connect a vacuum source to the vacuum clamping plate, and
a valve (27) situated in the channel (26) leading to the top surface (4), containing a valve-actuating member (37) projecting beyond the bearing surface of the workpiece and opening the valve (27) when a workpiece is applied thereto,
with a T-shaped groove (16) in the top surface (4) of at least one of the clamping plate modules (1, 2), extending in the vicinity of one side wall (9), and
with at least one plug-in coupling element (52) for the rigid connection of the at least two clamping plate modules (1, 2) and for the flow connection between the chambers (25) of the clamping plate modules (1, 2, 65).

2. Vacuum clamping device according to claim 1, characterised in that a clamping plate module (65) has in outline the shape of a hexagon, preferably a regular hexagon.

3. Vacuum clamping device according to claim 1, characterised in that a clamping plate module (2) has a pentagonal, outline, the included angle at two adjacent corners (11, 15) being 90° and the angle at a corner (13) not adjacent to the 90° corners being 120°.

4. Vacuum clamping device according to claim 1, characterised in that a clamping plate module (1) has a pentagonal outline, the included angle at two adjacent corners (11, 15) being 90° and the included angle at the corner (13) not adjacent to the 90° corners being 240°.

5. Vacuum clamping device according to claim 3 or claim 4, characterised in that the lengths of the side faces (6, 7) adjacent to the corner (13) with an included angle of 240° or 120° are identical.

6. Vacuum clamping device according to claim 3 or claim 4, characterised in that the T-shaped groove (16) extends parallel to the side wall (9) adjacent to the two 90° corners (11, 15).

7. Vacuum clamping device according to claim 1, characterised in that the top surface (4) and the underside (3) of one respective clamping plate section (1, 2, 65) are congruent.

8. Vacuum clamping device according to claim 1, characterised in that the side walls (5...9) extend at right angles to the top surface and underside (4, 3) of one respective clamping plate section (1, 2, 65).

9. Vacuum clamping device according to claim 1, characterised in that the chamber (25) in the clamping plate section (1, 2, 65) is formed by a recess of circular cross section open towards the underside (3), a shoulder (66) on which a cover (40) is placed in a sealed manner projecting radially into the interior thereof.

10. Vacuum clamping device according to claim 1, characterised in that the clamping plate section (1, 2, 65) is ferromagnetic on its underside (3).

11. Vacuum clamping device according to claims 9 and 10, characterised in that, in the clamping plate section (1, 2, 65), exclusively the cover (40) closing off the chamber (25) is ferromagnetic.

12. Vacuum clamping device according to claim 1, characterised in that the connecting channels (43) lead to openings (42) situated in the side walls (5...8) and that the centre of the opening (42) in at least one side wall (6, 7, 8) of the clamping plate module (1, 2, 65) is situated at the point of intersection of the diagonals of this side wall (6, 7, 8).

13. Vacuum clamping device according to claim 12, characterised in that the openings (42) in the connecting channels (43) situated in the side walls (5...8) are formed by stepped bores tapering in the direction of the chamber (25).

14. Vacuum clamping device according to claim 13, characterised in that a threaded bore (47) opening into the stepped bore (43) is provided at right angles to the stepped bore (43), said threaded bore departing from the underside (3) of the clamping plate module (1, 2, 65) and opening into the stepped bore (43) at a distance from the shoulder (45) formed by the stepped bore (43).

15. Vacuum clamping device according to claims 1 and 13, characterised in that a pipe member (52) is provided for the flow connection between the chambers (25) of two adjacent clamping plate sections (1, 2, 65), provided in its circumferential surface with annular grooves (56) at a distance from the end of the tubular connecting member (52) corresponding to the distance between the shoulder (45) of the stepped bore (43) and the axis of the threaded bore (47) in such a manner that when a pointed stud bolt (49) is screwed into the threaded bore (47) the connecting member (52) is pressed against the shoulder (45) of the stepped bore (43).

16. Vacuum clamping device according to claim 1, characterised in that the side walls (5...8) contain precision bores (51) which, in the case of clamping plate modules (1, 2, 65) with their corresponding side walls (5...8) adjacent to one another, are aligned with one another and serve to receive precision bolts.

17. Vacuum clamping device according to claims 1 and 15, characterised in that the coupling element (52) for the rigid connection of at least two clamping plate modules (1, 2, 65) is formed by the pipe member (52) situated in the connecting channels (43) of the relevant clamping plate modules (1, 2, 65).

18. Vacuum clamping device according to claim 1, characterised in that the valve (27) has a housing (28) provided with a central bore (31) in which a valve-closing member (34) is movably guided and which carries the valve-actuating member (37) projecting from the valve housing (38) and that the valve-closing member (34) is spring-loaded into the closed position.

19. Vacuum clamping device according to claim 18, characterised in that the housing (28) has a bore (31) for the passage of the valve-actuating member (37), simultaneously constituting a through opening for the valve (27).

20. Vacuum clamping device according to claim 19, characterised in that the through opening (31) has a cross-sectional shape differing from the cross section of the valve-actuating member (37) and having a larger surface area.

21. Vacuum clamping device according to claim 1, characterised in that removable closure plugs are provided to close off unrequired connecting channels (43).

22. Vacuum clamping device according to claim 21, characterised in that the closure plug has a substantially cylindrical shape and contains a circumferential groove, the distance of which from one end face corresponds to the distance between the shoulder of the relevant stepped bore and the centre of the threaded bore.

23. Vacuum clamping device according to claim 1, characterised in that a connecting member (58) which can be removably inserted in one of the connecting channels (43) is provided in order to connect the clamping plate section (1, 2, 65) to the vacuum source.

24. Vacuum clamping device according to claim 23, characterised in that the connecting member (58) has a substantially cylindrical shape at least in one portion, containing a circumferential groove (56) the distance of which from one end face of the connecting member (58) is identical to the distance between the shoulder (45) of the stepped bore (43) and the centre of the threaded bore (47).

25. Vacuum clamping device according to claim 1, characterised in that the pattern of grooves (17, 18) on one of the clamping plate modules (1, 2, 65) is at least partially framed by a strip (23) following the contour of the clamping plate modules (1, 2, 65).

## Revendications

1. Plaque de serrage à vide,
avec au moins deux plaques de serrage (1, 2, 65) élémentaires de type modulaire enfichables qui comportent chacune:
une face supérieure (4) pourvue d'un réseau de rainures (17, 18), sur laquelle les surélévations (19) formées par le réseau de rainures (17, 18) constituent une surface d'appui pour une pièce,
une face inférieure (3) éloignée de la face supérieure (4), la distance entre la face supérieure (4) et la face inférieure (3) étant identique pour toutes les plaques de serrage élémentaires (1, 2, 65),
une ou plusieurs parois de côté (5...9) qui s'étendent entre la face supérieure (4) et la face inférieure (3),
une chambre (25) disposée à l'intérieur de la plaque de serrage (1, 2, 65) élémentaire et fermée en direction de la face inférieure (3), qui communique par au moins un canal (26) avec le réseau de rainures (17, 18) et à partir de laquelle des canaux de liaison (43) mènent à la ou à chaque paroi de côté (5...9) aux fins de relier entre elles du point de vue fluidique les chambres (25) des plaques de serrage (1, 2, 65) élémentaires ou de connecter une source de vide à la plaque de serrage à vide et,
une soupape (27) disposée dans le conduit (26) menant à la face supérieure (4), laquelle soupape comprend un organe d'actionnement (37) de la soupape qui fait saillie au-delà de la surface d'appui de la pièce et ouvre la soupape (27) lorsqu'une pièce est posée,
avec dans au moins une des plaque de serrage (1, 2) élémentaires, une rainure (16) en T aménagée dans la face supérieure (4), qui s'étend dans le voisinage d'une paroi de côté (9) ainsi
qu'avec au moins un élément de couplage (52) enfichable pour relier de manière rigide les plaques de serrage (1, 2) élémentaires au nombre d'au moins deux et pour connecter entre elles du point de vue fluidique les chambres (25) des plaques de serrage (1, 2, 65) élémentaires.

2. Dispositif de serrage à vide selon la revendication 1, caractérisé par le fait qu'une plaque de serrage (65) élémentaire a en vue de dessus la forme d'un hexagone, de préférence d'un hexagone régulier.

3. Dispositif de serrage à vide selon la revendication 1, caractérisé par le fait qu'une plaque de serrage (2) élémentaire a une forme de pentagone, deux angles consécutifs (11, 15) ayant chacun une valeur égale à 90° et l'angle (13) qui n'est consécutif à aucun des deux angles à 90° ayant une valeur de 120°.

4. Dispositif de serrage à vide selon la revendication 1, caractérisé par le fait qu'une plaque de serrage (1) élémentaire a une forme de pentagone, deux angles consécutifs (11, 15) ayant chacun une valeur égale à 90° et l'angle (13) qui n'est consécutif à aucun des deux angles à 90° ayant une valeur de 240°.

5. Dispositif de serrage à vide selon la revendication 3 ou 4, caractérisé par le fait que les côtés (6, 7) adjacents à l'angle (13) de 240° ou 120° ont des longueurs identiques.

6. Dispositif de serrage à vide selon la revendication 3 ou 4, caractérisé par le fait que la rainure en T (16) est parallèle à la paroi de côté (9) qui est adjacente aux deux angles (11, 15) à 90°.

7. Dispositif de serrage à vide selon la revendication 1, caractérisé par le fait que la face supérieure (4) et la face inférieure (3) d'une même plaque de serrage (1, 2, 65) élémentaire sont identiques.

8. Dispositif de serrage à vide selon la revendication 1, caractérisé par le fait que les parois de côté (5...9) sont disposées à angle droit par rapport aux faces supérieure et inférieure (3, 4) d'une plaque de serrage (1, 2, 65) élémentaire concernée.

9. Dispositif de serrage à vide selon la revendication 1, caractérisé par le fait que la chambre (25) dans la plaque de serrage (1, 2, 65) élémentaire est formée par une cavité de section circulaire ouverte en direction de la face inférieure (3) à l'intérieur de laquelle un épaulement (66) contre lequel un couvercle (40) est appliqué avec étanchéité fait saillie radialement.

10. Dispositif de serrage à vide selon la revendication 1, caractérisé par le fait que la plaque de serrage (1, 2, 65) élémentaire est ferromagnétique au niveau de sa face inférieure (3).

11. Dispositif de serrage à vide selon les revendications 9 et 10, caractérisé par le fait que dans la plaque de serrage (1, 2, 65) élémentaire, seul le couvercle (40) qui ferme la chambre (25) est ferromagnétique.

12. Dispositif de serrage à vide selon la revendication 1, caractérisé par le fait que les canaux de liaison (43) mènent à des ouvertures (42) aménagées dans les parois de côté (5...8) et par le fait que le centre de l'ouverture (42), dans au moins une paroi de côté (6, 7, 8) de la plaque de serrage (1, 2, 65) élémentaire, est situé au point d'intersection des diagonales de cette paroi de côté (6, 7, 8).

13. Dispositif de serrage à vide selon la revendication 12, caractérisé par le fait que les ouvertures (42) des canaux de liaison (43) aménagées dans les parois de côté (5...8) sont des perçages étagés qui se rétrécissent en direction de la chambre (25).

14. Dispositif de serrage à vide selon la revendication 13, caractérisé par le fait qu'il est prévu, perpendiculairement au perçage étagé (43), un trou taraudé (47) débouchant dans le perçage étagé (43) qui part de la face inférieure (3) de la plaque de serrage (1, 2, 65) élémentaire et débouche dans le perçage étagé (43), à distance de l'épaulement (45) formé par ledit perçage étagé (43).

15. Dispositif de serrage à vide selon les revendications 1 à 13, caractérisé par le fait qu'il est prévu pour relier sur le plan fluidique les chambres (25) de deux plaques de serrage (1, 2, 65) élémentaires contiguës, un tronçon de tube (52) portant sur sa surface extérieure des gorges annulaires (56) qui sont disposées à une distance de l'about du tronçon de tube (52) de liaison qui correspond à la distance entre l'épaulement (45) du perçage étagé (43) et l'axe du trou taraudé (47), de sorte qu'en vissant une vis sans tête (49) à bout conique dans le trou taraudé (47) le tronçon de tube (52) de liaison soit pressé contre l'épaulement (45) du perçage étagé (43).

16. Dispositif de serrage à vide selon la revendication 1, caractérisé par le fait les parois de côté (5...8) contiennent des alésages (51) qui servent à recevoir des pied de centrage lorsque des plaques de serrage (1, 2, 65) élémentaires dotées de parois latérales (58) correspondantes sont alignées.

17. Dispositif de serrage à vide selon les revendications 1 à 15, caractérisé par le fait que l'élément de liaison (52) pour relier rigidement l'une à l'autre au moins deux plaques de serrage (1, 2, 65) élémentaires est constitué par le tronçon de tube (52) inséré dans les canaux de liaison (43) correspondants des plaques de serrage (1, 2, 65) élémentaires concernées.

18. Dispositif de serrage à vide selon la revendication 1, caractérisé par le fait que la soupape (27) comporte un corps (28) pourvu d'un trou central (31) à l'intérieur duquel un élément d'obturation (34) qui porte l'organe d'actionnement (37) faisant saillie hors du corps est guidé avec possibilité de déplacement et par le fait que l'élément d'obturation (34) est précontraint élastiquement dans la position de fermeture.

19. Dispositif de serrage à vide selon la revendication 18, caractérisé par le fait que le corps (28) comporte un trou (31) pour le passage de l'organe d'actionnement (37), qui constitue simultanément un orifice de passage pour la soupape (27).

20. Dispositif de serrage à vide selon la revendication 19, caractérisé par le fait que l'orifice de passage (1) présente une forme en section transversale différente de celle de l'organe d'actionnement (37) avec une surface plus grande.

21. Dispositif de serrage à vide selon la revendication 1, caractérisé par le fait que des bouchons démontables sont prévus pour obturer les canaux de liaison (43) non utilisés.

22. Dispositif de serrage à vide selon la revendication 21, caractérisé par le fait que le bouchon a une forme sensiblement cylindrique et comporte une rainure circonférentielle dont la distance par rapport à une face d'about correspond à la distance séparant l'épaulement du perçage étagé concerné du centre du trou taraudé.

23. Dispositif de serrage à vide selon la revendication 1, caractérisé par le fait qu'une pièce de liaison (58) démontable est prévue pour connecter la plaque de serrage (1, 2, 65) élémentaire à la source de vide.

24. Dispositif de serrage à vide selon la revendication 23, caractérisé par le fait que la pièce de liaison (58) présente, sur une partie au moins, une forme cylindrique qui contient une rainure circonférentielle (56), dont la distance par rapport à une face d'about de la pièce de liaison (58) est égale à la distance qui sépare l'épaulement (45) du perçage étagé (43) du centre du trou taraudé (47).

25. Dispositif de serrage à vide selon la revendication 1, caractérisé par le fait que, dans l'une des plaques de serrage (1, 2, 65) individuelles, le réseau de rainures (17, 18) est au moins partiellement entouré d'un rebord (23) qui suit le contour de la plaque de serrage (1, 2, 65) individuelle.
